# EUROPÄISCHE PATENTSCHRIFT

(11) **EP 3 684 526 B1**
(45) Veröffentlichungstag und Bekanntmachung des Hinweises auf die Patenterteilung: **13.12.2023**
(21) Anmeldenummer: 18792351.1
(22) Anmeldetag: 11.09.2018
(51) Int. Cl.: B22C 9/18

(54) **VERFAHREN ZUM ENTGRATEN VON GIESSKERNEN UND GIESSFORMEN**
METHOD FOR DEBURRING CASTING CORES AND CASTING MOULDS
PROCÉDÉ POUR ÉBAVURER DES NOYAUX DE COULÉE ET DES MOULES DE COULÉE

(30) Priorität: 18.09.2017 AT 507792017; 29.09.2017 AT 508352017
(43) Veröffentlichungstag der Anmeldung: 29.07.2020
(73) Patentinhaber: Fill Gesellschaft m.b.H., 4942 Gurten (AT)
(72) Erfinder: BOINDECKER, Alois, 4942 Gurten (AT); GURTNER, Engelbert, 4943 Geinberg (AT)
(74) Vertreter: Burger, Hannes
(86) Internationale Anmeldenummer: PCT/AT2018/060206
(87) Internationale Veröffentlichungsnummer: WO 2019/051521

(56) Entgegenhaltungen:
- EP-A1- 0 140 511
- DE-A1-102016 223 732
- JP-A- S5 744 448
- JP-A- H01 299 741
- US-A1- 2013 203 320

## Beschreibung

Die Erfindung betrifft ein Verfahren zum Entgraten von Gießkernen oder Gießformen, wie sie in der Gießereitechnik zum Erzeugen von gegossenen Werkstücken verwendet werden.

Aus dem Stand der Technik sind verschiedenste Vorrichtungen zum Entgraten von Gießformen oder Gießkernen bekannt. Die EP 0608518 A2 oder die DE3617575 A1 offenbaren beispielsweise eine Vorrichtung zum Entgraten von Gießformen oder Gießkernen. Außerdem ist es bekannt die Gießformen oder Gießkerne mittels Roboter zu entgraten.

Die JP H01 299741 A offenbart ein Verfahren zum Entgraten eines Gießkernes. Der Kern wird mittels eines Roboters gehalten und relativ zu einer Düse zum Aufbringen eines abrasiven Materials bewegt. US2013/203320 A1 offenbart die Überwachung von Entgrateprozessen.

Die bekannten Vorrichtungen und Verfahren zum Entgraten von Gießformen oder Gießkernen weisen den Nachteil auf, dass sie nicht für verschiedenartig ausgebildete Kerne geeignet sind. Darüber hinaus nehmen die bekannten Entgratverfahren viel Zeit in Anspruch. Außerdem verschleißen die Vorrichtungen zum Entgraten der Gießformen oder Gießkerne. Bei Verwendung von nicht sauber entgrateten Gießkernen oder Gießformen beim Gießen, können die verbliebenen Grate abbrechen und das Gusswerkstück verunreinigen bzw. zur Schwächung von diesem führen.

Aufgabe der vorliegenden Erfindung war es, die Nachteile des Standes der Technik zu überwinden und ein Verfahren und eine Vorrichtung zur Verfügung zu stellen, mittels derer die Gießkerne und Gießformen erleichtert entgratet werden können.

Diese Aufgabe wird durch eine Vorrichtung und ein Verfahren gemäß den Ansprüchen gelöst. Erfindungsgemäß ist ein Verfahren zum Entgraten von Gießkernen und/oder Gießformen vorgesehen. Das Verfahren weist folgende Verfahrensschritte auf:
- Bereitstellen eines Gießkernes oder einer Gießform mit einem darauf befindlichen Grat;
- Bereitstellen einer Entgratvorrichtung, umfassend:
   eine Schwallbrause zum Erzeugen eines Strahlgutschwalles;
   eine Haltevorrichtung zur Aufnahme des Gießkerns und/oder der Gießform;
- Relativbewegen des Gießkernes oder der Gießform zum Strahlgutschwall, sodass der Strahlgutschwall auf den Grat am Gießkern oder der Gießform auftrifft und der Grat mittels dem Strahlgutschwall vom Gießkern oder der Gießform abgeschlagen wird.

Das erfindungsgemäße Verfahren weist den Vorteil auf, dass mittels dem Strahlgutschwall der Grad einfach vom Gießkern oder der Gießform entfernt werden kann und der Gießkern oder die Gießform dabei nicht beschädigt wird. Da sich der Strahlgutschwall über eine größere Breite erstrecken kann, muss der Strahlgutschwall nicht unbedingt exakt entlang des Grates geführt werden. Im Gegensatz zur Entgratung mittels Roboter und einem entsprechenden Fräswerkzeug ist somit eine exakte Steuerung nicht notwendig. Darüber hinaus tritt beim beschriebenen Verfahren kein Verschleiß an der Entgratvorrichtung auf, sodass auch nach einer hohen Anzahl an Zykluswiederholungen ein exaktes Ergebnis der Entgratung erreicht werden kann.

Weiters kann es zweckmäßig sein, wenn der Strahlgutschwall nach dem Austreten aus der Schwallbrause durch seine potentielle Energie beschleunigt wird und nach einer vorbestimmten Fallhöhe auf den Gießkern oder die Gießform auftrifft. Von Vorteil ist hierbei, dass die einzelnen Partikel des Strahlgutschwalles nicht wie etwa beim Sandstrahlen durch Druckluft beschleunigt werden müssen, sondern dass die Schwerkraft ausgenutzt wird, um die einzelnen Partikel des Strahlgutschwalles zu beschleunigen. Dadurch ist es möglich, die Energie des Strahlgutschwalles über die Fallhöhe exakt zu regeln. Darüber hinaus können beim erfindungsgemäßen Verfahren die Verluste möglichst gering gehalten werden. Die Fallhöhe kann zwischen 0,1m und 5m, insbesondere zwischen 0,5m und 3m, bevorzugt zwischen 1m und 2m betragen.

Weiters kann auch vorgesehen sein, dass zusätzlich zur potentiellen Energie die einzelnen Partikel durch ein Medium, wie etwa Druckluft beschleunigt werden.

Weiters ist vorgesehen, dass die Haltevorrichtung ortsfest angeordnet ist und die Schwallbrause relativ zur Haltevorrichtung bewegt wird.

Vorteilhaft ist auch eine Ausprägung, gemäß welcher vorgesehen sein kann, dass die Haltevorrichtung, mittels der der Gießkern oder die Gießform relativ zum Strahlgutschwall bewegt wird, als Schwenkarmroboter ausgebildet ist und der Schwenkarmroboter den Gießkern oder die Gießform dem Pfad des Grates folgend durch den Strahlgutschwall bewegt. Mittels dem Schwenkarmroboter kann der Gießkern oder die Gießform exakt relativ zum Strahlgutschwall geführt werden und somit einem Pfad des Grates folgen, sodass der Grat am gesamten Umfang des Gießkerns oder der Gießform gleichmäßig abgeschlagen werden kann. Gleichzeitig kann mittels dem Schwenkarmroboter auch die Orientierung des Gießkerns oder der Gießform geändert werden.

Gemäß einer Weiterbildung ist es möglich, dass am Schwenkarmroboter eine Greifvorrichtung angeordnet ist, mittels der der Gießkern oder die Gießform gehalten wird, wobei der Gießkern oder die Gießform derart gehalten wird, dass der Grat am Gießkern oder an der Gießform frei zugänglich ist. Von Vorteil ist hierbei, dass durch diese Maßnahme die Greifvorrichtung nicht die Zugänglichkeit des Grates behindert. Somit kann der Gießkern oder die Gießform mittels der Greifvorrichtung gehalten und manipuliert werden.

Ferner kann es zweckmäßig sein, wenn die Haltevorrichtung in Form einer Fördervorrichtung ausgebildet ist, wobei mehrere der Gießkerne oder der Gießformen an der Fördervorrichtung angeordnet sind und mittels dieser durch den Strahlgutschwall hindurch bewegt werden. Von Vorteil ist hierbei, dass mehrere Gießkerne oder Gießformen gleichzeitig entgratet werden können bzw. in einem kontinuierlich ablaufenden Prozess entgratet werden können. Dies ist besonders bei der Serienfertigung vorteilhaft, wenn der Gießkern oder die Gießform eine einfache Geometrie aufweisen.

Darüber hinaus kann vorgesehen sein, dass der Strahlgutschwall eine große Anzahl von Teilchen umfasst, die einen Durchmesser zwischen 0,3mm und 5mm, insbesondere zwischen 1mm und 3mm, bevorzugt zwischen 1,4mm und 2mm aufweisen. Wenn die Teilchen des Strahlgutes einen Durchmesser im angegebenen Bereich aufweisen, bringt dies den überraschenden Vorteil mit sich, dass der Grat sauber und effizient abgeschlagen werden kann und die umliegende Oberfläche des Gießkerns oder der Gießform dabei nicht beschädigt wird.

Weiters kann vorgesehen sein, dass die Teilchen des Strahlgutschwalles aus Schrott gewonnen sind. Von Vorteil ist hierbei, dass die Teilchen des Strahlgutschwalles durch diese Maßnahme kostengünstig und umweltschonend hergestellt werden können.

Gemäß einer besonderen Ausprägung ist es möglich, dass auf Basis der Beschaffenheit des abzuschlagenden Grates die Fallhöhe und die Beweggeschwindigkeit des Gießkerns oder der Gießform relativ zum Strahlgutschwall derart festgelegt wird, dass ausschließlich der Grat abgeschlagen wird und die restliche Außenkontur des Gießkerns oder der Gießform nicht beschädigt wird. Von Vorteil ist hierbei, dass durch diese Maßnahme eine saubere Entgratung erreicht werden kann, wobei der Gießkern oder die Gießform nicht beschädigt wird. Insbesondere die Fallhöhe und die Bewegungsgeschwindigkeit können variiert werden, um bei gleichbleibendem Strahlgut die Intensität des Strahlgutschwalles anpassen zu können. Hierbei ist es sinnvoll, dass durch Einstellung dieser Parameter die Intensität des Strahlgutschwalles an die Beschaffenheit des Grates angepasst wird. In einer Weiterbildung ist es auch denkbar, dass in einer CFD-Simulation bzw. in einer numerischen Simulation das Abschlagen des Grates simuliert bzw. die notwendigen Parameter entsprechend berechnet werden.

Entsprechend einer vorteilhaften Weiterbildung kann vorgesehen sein, dass die Beschaffenheit des Grates vor der Behandlung mittels dem Strahlgutschwall mittels einem Erfassungsmittel, insbesondere einem optischen Erfassungsmittel, erfasst wird. Von Vorteil ist hierbei, dass durch diese Maßnahme die Parameter wie Fallhöhe und Bewegungsgeschwindigkeit gezielt an die Beschaffenheit des Grates angepasst werden können. Insbesondere kann dabei vorgesehen sein, dass die Oberflächenstruktur des Grates mittels einem Kamerasystem erfasst und entsprechend ausgewertet wird.

Insbesondere kann es vorteilhaft sein, wenn mittels einer Absaugvorrichtung die abgeschlagenen Gratfragmente aus der Entgratvorrichtung entfernt werden. Von Vorteil ist hierbei, dass durch diese Maßnahme die abgeschlagenen Gratfragmente nicht zu einer Verunreinigung des Strahlgutes führen und somit eine gleichbleibende Qualität der Entgratung erreicht werden kann.

Ferner kann vorgesehen sein, dass der Gießkern oder die Gießform derart orientiert durch den Strahlgutschwall geführt wird, dass der Strahlgutschwall in etwa Normal bzw. im rechten Winkel auf eine Gratseitenfläche des Grates trifft. Durch diese Maßnahme kann der Grat am Gießkern oder an der Gießform sauber entfernt werden, wobei die Energie des Strahlgutschwalles hierbei möglichst geringgehalten werden kann.

Darüber hinaus kann vorgesehen sein, dass der Gießkern oder die Gießform nach der Behandlung mittels dem Strahlgutschwall mittels einem Erfassungsmittel, insbesondere einem optischen Erfassungsmittel, erfasst wird und die korrekte Entfernung des Grates kontrolliert wird. Mittels dem optischen Erfassungsmittel kann die Qualität der durchgeführten Entgratung kontrolliert werden und sichergestellt werden, dass der Grat gleichmäßig abgeschlagen ist bzw. können durch diese Maßnahme etwaige Beschädigungen am Gießkern oder an der Gießform festgestellt werden.

Erfindungsgemäß ist auch eine Entgratvorrichtung zum Entgraten von Gießkernen und/oder Gießformen vorgesehen. Die Entgratvorrichtung umfasst:
- eine Schwallbrause zum Erzeugen eines Strahlgutschwalles;
- eine Haltevorrichtung zur Aufnahme zumindest eines Gießkerns und/oder einer Gießform. Die Haltevorrichtung und die Schwallbrause sind derart ausgebildet sind, dass der Gießkern und/oder die Gießform durch den Strahlgutschwall führbar ist.

Von Vorteil an der erfindungsgemäßen Entgratvorrichtung ist, dass mit dieser der Entgratvorgang effizient durchgeführt werden kann.

Gemäß einer Weiterbildung ist es möglich, dass die Haltevorrichtung in Form eines Schwenkarmroboters ausgebildet ist. Ein Schwenkarmroboter weist eine hohe Flexibilität auf, wodurch der Gießkern bzw. die Gießform entlang des Pfades des Grates geführt werden kann und der Grat somit umlaufend abgeschlagen werden kann.

Ferner kann es zweckmäßig sein, wenn am Schwenkarmroboter eine Greifvorrichtung zum Halten des Gießkerns oder der Gießform angeordnet ist, wobei die Greifvorrichtung und/oder der Schwenkarmroboter zumindest teilweise eine Beschichtung aufweist, die die Greifvorrichtung und/oder den Schwenkarmroboter vor dem Strahlgutschwall schützt. Durch die Beschichtung kann die Greifvorrichtung bzw. der Schwenkarmroboter vor Beschädigung durch den Strahlgutschwall geschützt werden. Dadurch ist es möglich, eine hohe Lebensdauer der Entgratvorrichtung zu erreichen.

In einer Weiterbildung kann vorgesehen sein, dass die Schwallbrause an einen Strahlgutbehälter gekoppelt ist, welcher oberhalb der Schwallbrause angeordnet ist. Durch diese Maßnahme kann das Strahlgut direkt aus dem Strahlgutbehälter durch Einwirkung der Schwerkraft auf den Gießkern bzw. die Gießform geführt werden.

Als Gießkerne werden Gebilde bezeichnet, die während dem Gießen vorzugsweise einer metallischen Schmelze in eine Gießform als Platzhalter dienen, um im fertigen Gusswerkstück entfernt zu werden und einen Hohlraum zu bilden. Die Gießkerne können aus verschiedensten Materialien bestehen und durch verschiedenste Verfahren hergestellt werden.

Die Gießkerne können beispielsweise aus Sand gefertigt sein, welcher mittels einem Bindemittel in Form gehalten wird. Ein derartigerer aus Sand geformter Kern wird als Sandkern bezeichnet.

Ein derartiger Sandkern kann beispielsweise mittels Kernschießen hergestellt werden, wie es in der DE 102011100415 A1 beschrieben ist.

Weiters ist es auch denkbar, dass der Gießkern mittels einem 3D-Druck-Verfahren hergestellt wird, wie es in der DE 102005019699 B3 beschrieben ist.

Darüber hinaus ist es auch denkbar, dass der Gießkern als Keramikkern ausgeführt ist, wie er in der EP0818256 A1 beschrieben ist.

Weiters ist es auch möglich, dass der Gießkern als Salzkern ausgeführt ist.

Als Gießformen werden Gebilde bezeichnet, die zum Aufnehmen der Schmelze dienen. Derartige Gießformen können ebenfalls wie die Gießkerne aus verschiedensten Materialen und durch verschiedene Herstellverfahren gefertigt werden. Hierbei handelt es sich vorzugsweise um verlorene Formen, die beispielsweise aus Sand hergestellt sind.

Die Grate an den Gießkernen bzw. Gießformen entstehen an jenen Stellen, an denen zwei Formhälften zum Herstellen der Gießkerne bzw. Gießformen aneinander anliegen. Je mehr die Formhälften verschlissen sind, desto eher besteht die Gefahr, dass am Gießkern bzw. an der Gießform ein Grat entsteht bzw. desto größer ist in den meisten Fällen der entstandene Grat. Der Grat weist eine Gratseitenfläche auf, die sich von einer Gratbasis bis zu einem Gratkopf erstreckt.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Gießkerns;
- Fig. 2: eine perspektivische Ansicht einer Gießform;
- Fig. 3: eine schematische Darstellung eines ersten Ausführungsbeispiels einer Entgratvorrichtung;
- Fig. 4: eine schematische Darstellung eines weiteren Ausführungsbeispiels einer Entgratvorrichtung;
- Fig. 5: eine Detailansicht eines Strahlgutschwalles der am abzuschlagenden Grat auftrifft;
- Fig. 6: einen Oberflächenausschnitt eines im 3D-Druck-Verfahren hergestellten Gießkernes oder Gießform;
- Fig. 7: den Oberflächenausschnitt des im 3D-Druck-Verfahren hergestellten Gießkernes oder Gießform nach der Behandlung mittels dem Strahlgutschwall.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

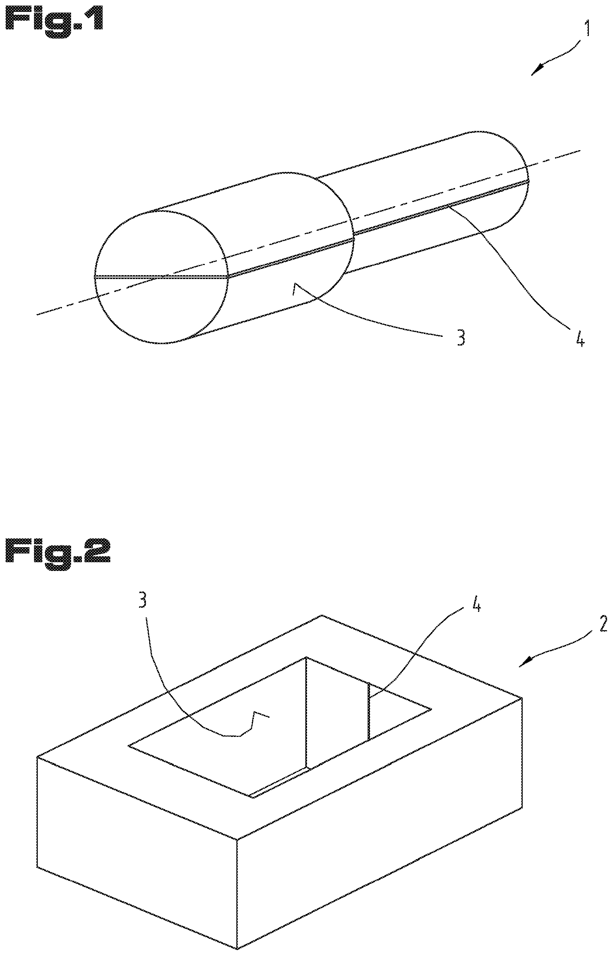

Fig. 1 zeigt eine perspektivische Ansicht eines Ausführungsbeispiels eines Gießkerns 1.

Fig. 2 zeigt eine perspektivische Ansicht eines Ausführungsbeispiels einer Gießform 2.

Insbesondere kann vorgesehen sein, dass der Gießkern 1 bzw. die Gießform 2 als Sandkern bzw. als Sandform ausgebildet sind und somit bedingt durch deren Herstellungsprozess an der Außenkontur 3 einen Grat 4 aufweisen. Als Außenkontur 3 wird hierbei jene Oberfläche des Gießkerns 1 bzw. der Gießform 2 bezeichnet, welche während dem Gießvorgang in Kontakt mit der flüssigen Schmelze kommt. Bei der Gießform 2 ist daher die relevante Außenkontur 3 innerhalb der Gießform 2 angeordnet.

Der Grat 4 entsteht bei der Herstellung des Gießkerns 1 bzw. der Gießform 2 dadurch, dass beispielsweise zur Herstellung des Gießkerns 1 zwei Formhälften verwendet werden, welche die Kontur des Gießkerns 1 vorgeben und in welchen der Sand zur Herstellung des Gießkerns 1 eingebracht wird. Der Grat 4 entsteht hierbei an einer Trennebene der beiden Formhälften.

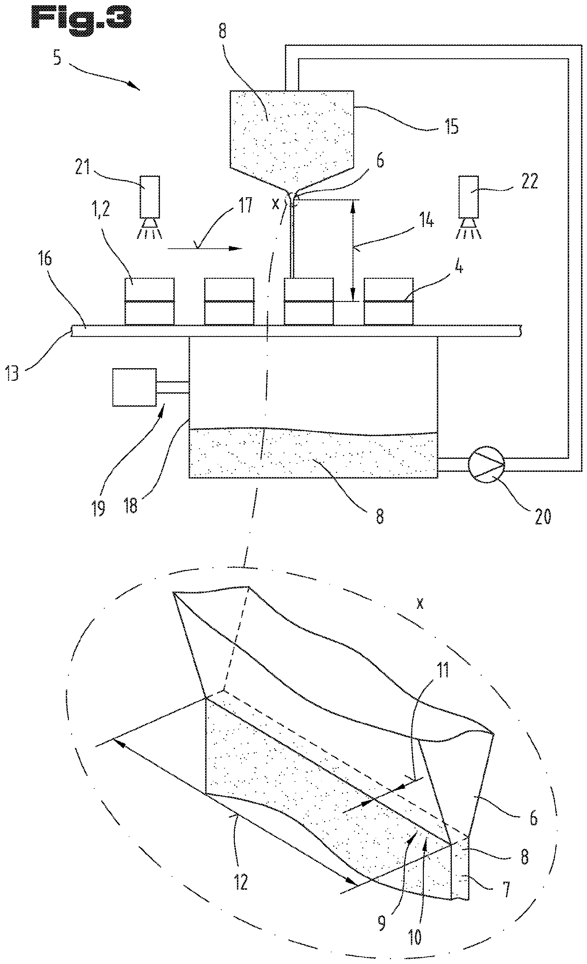

Fig. 3 zeigt ein erstes Ausführungsbeispiel einer Entgratvorrichtung 5 zum entgraten eines Gießkerns 1 bzw. einer Gießform 2. Wie aus Fig. 3 ersichtlich, ist vorgesehen, dass die Entgratvorrichtung 5 eine Schwallbrause 6 aufweist, aus der ein Strahlgutschwall 7 austritt. Die Schwallbrause 6 kann vorzugsweise derart ausgebildet sein, dass das Strahlgut 8 für den Strahlgutschwall 7 schwerkraftbeschleunigt aus der Schwallbrause 6 austreten kann. Insbesondere kann hierbei vorgesehen sein, dass die Schwallbrause 6 an deren Unterseite 9 eine Austrittsöffnung 10 aufweist, an welcher das Strahlgut 8 austreten kann und somit zum Strahlgutschwall 7 wird.

Die Form der Austrittsöffnung 10 bestimmt auch die Form des Strahlgutschwalls 7. Insbesondere kann vorgesehen sein, dass die Austrittsöffnung 10 eine Breite 11 und eine Länge 12 aufweist. Die breite 11 bzw. die Länge 12 sind möglichst klein gewählt, sodass möglichst wenig Strahlgut 8 aus der Schwallbrause 6 austritt, jedoch so groß gewählt ist, dass der Strahlgutschwall 7 ausreichend Energie aufweist, um den Grat 4 am Gießkern 1 bzw. der Gießform 2 abschlagen zu können. Darüber hinaus ist die Länge 12 der Austrittsöffnung 10 so groß gewählt, dass je nach Beschaffenheit der Entgratvorrichtung 5 der Grat 4 am Gießkern 1 bzw. an der Gießform 2 einfach und effizient abgeschlagen werden kann. Die Breite 11 der Austrittsöffnung 10 kann hierbei sehr viel kleiner sein als die Länge 12 der Austrittsöffnung 10. Mit anderen Worten ausgedrückt kann der Strahlgutschwall 7 aufgrund der Dimensionierung der Schwallbrause 6 eine Art Vorhang aus Strahlgut 8 bilden, durch welchen der Gießkern 1 bzw. die Gießform 2 hindurchbewegt werden kann.

Weiters ist eine Haltevorrichtung 13 vorgesehen, die zur Aufnahme des Gießkerns 1 bzw. der Gießform 2 dient und diese relativ zur Schwallbrause 6 positioniert. Die Haltevorrichtung 13 und die Schwallbrause 6 sind derart relativ zueinander angeordnet, dass der Strahlgutschwall 7 mit einer vorbestimmten Fallhöhe 14 auf den Grat 4 des Gießkerns 1 bzw. der Gießform 2 auftrifft. Durch Veränderung der Fallhöhe 14 kann die Auftreffenergie des Strahlgutschwalles 7 variiert werden.

Zur kontinuierlichen Versorgung der Schwallbrause 6 mit Strahlgut 8 kann ein Strahlgutbehälter 15 vorgesehen sein, welcher direkt an die Schwallbrause 6 gekoppelt sein kann. Insbesondere kann vorgesehen sein, dass die Schwallbrause 6 an einer Unterseite des Strahlgutbehälters 15 angeordnet ist.

Die Haltevorrichtung 13 kann verschiedenartig ausgebildet sein. Wie aus dem Ausführungsbeispiel aus Fig. 3 ersichtlich, kann vorgesehen sein, dass die Haltevorrichtung 13 als Fördervorrichtung 16 ausgebildet ist, mittels welcher die Gießkerne 1 bzw. die Gießformen 2 in Förderrichtung 17 relativ zur Schwallbrause 6 bewegt werden können.

Die Fördervorrichtung 16 kann hierbei einen Bandförderer umfassen, wobei das Förderband des Bandförderers aus einem Drahtgeflecht gebildet sein kann, durch welches das Strahlgut 8 und die Gratfragmente des abgeschlagenen Grates 4 hindurchrieseln können, somit ist es möglich, dass die Haltevorrichtung 13 als kontinuierliche Förderrichtung ausgebildet ist, an welcher mehrere Gießkerne 1 bzw. Gießformen 2 aufgelegt bzw. bearbeitet werden können.

Bei Ausbildung einer derartigen Fördervorrichtung 16 kann es zweckmäßig sein, wenn die Länge 12 der Schwallbrause 6 so groß gewählt ist, dass sie größer ist als die Erstreckung der Gießkerne 1 bzw. der Gießformen 2, sodass beim Durchführen der Gießkerne 1 bzw. der Gießformen 2 durch den Strahlgutschwall 7 der Grat 4 vollumfänglich abgeschlagen werden kann.

In einem weiteren Ausführungsbeispiel kann auch vorgesehen sein, dass die Fördervorrichtung 16 einen Gitterrost umfasst, auf welchem ebenfalls mehrere Gießkerne 1 bzw. Gießformen 2 aufgelegt werden können, wobei die Fördervorrichtung 16 alternierend zwischen einer ersten Endposition und einer zweiten Endposition bewegt werden kann.

In einer weiteren Ausführung ist es auch denkbar, dass die Fördervorrichtung 16 als Rundtisch ausgebildet ist, welche ebenfalls einen Gitterrost umfasst auf dem die Gießkerne 1 bzw. Gießformen 2 aufgelegt werden können. Die Gießkerne 1 bzw. Gießformen 2 können in einem ersten Bereich des Rundtisches aufgelegt werden, in einem zweiten Bereich des Rundtisches durch die Schwallbrause 6 geführt werden und in einem dritten Bereich des Rundtisches wieder vom Rundtisch abgenommen werden. Der Rundtisch kann sich hierbei kontinuierlich drehen.

In wieder einer andern Ausführungsvariante kann auch vorgesehen sein, dass die Haltevorrichtung 13 beispielsweise einen Gitterrost umfasst auf welchem ebenfalls mehrere Gießkerne 1 bzw. Gießformen 2 aufgelegt werden können. Der Gitterrost kann hierbei ortsfest angeordnet sein und die Schwallbrause 6 kann relativ zur Haltevorrichtung 13 bewegt werden.

Weiters kann vorgesehen sein, dass die Entgratvorrichtung 5 einen Auffangbehälter 18 aufweist, welcher unterhalb der Schwallbrause 6 angeordnet ist und welcher zum Auffangen des Strahlgutes 8 bzw. der abgeschlagenen Gratfragmente dient.

Außerdem kann eine Absaugvorrichtung 19 vorgesehen sein, welche beispielsweise an den Auffangbehälter 18 gekoppelt sein kann und zum Absaugen der abgeschlagenen Gratfragmente dient. Die Absaugvorrichtung 19 kann natürlich auch an anderer Stelle der Entgratvorrichtung 5 angeordnet sein.

Weiters kann eine Strahlgutfördervorrichtung 20 ausgebildet sein, welche zum Fördern des im Auffangbehälter 18 aufgefangenen Strahlgutes 8 in den über der Schwallbrause 6 angeordneten Strahlgutbehälter 15 dient. Die Strahlgutfördervorrichtung 20 kann verschiedenartig ausgebildet sein, beispielsweise ist es denkbar, dass die Strahlgutfördervorrichtung 20 in Form eines Bandförderers, in Form eines Becherwerkes, in Form einer Förderschnecke, in Form eines Gebläses oder durch eine sonstige Einrichtung gebildet ist, welche dazu geeignet ist, dass Strahlgut 8 aus dem Auffangbehälter 18 in den Strahlgutbehälter 15 zu fördern.

Weiters kann vorgesehen sein, dass die Absaugvorrichtung 19 in die Strahlgutfördervorrichtung 20 integriert ist.

Weiters kann die Entgratvorrichtung 5 ein Erfassungsmittel 21 aufweisen, welches zur Erfassung der Gratform des Grates 4 dient. Insbesondere kann mit dem Erfassungsmittel 21 die geometrische Formgebung des Grates 4 am Gießkern 1 bzw. an der Gießform 2 bestimmt werden. Das Erfassungsmittel 21 kann beispielsweise als optisches Erfassungsmittel ausgebildet sein. Insbesondere ist es hierbei denkbar, dass ein Kamerasystem zur Erfassung des Grates 4 dient.

Außerdem kann ein Erfassungsmittel 22 vorgesehen sein, welches nach dem Entgratvorgang zur Kontrolle des Gießkernes 1 bzw. der Gießform 2 dienen kann. Das Erfassungsmittel 22 kann ebenfalls als optisches Erfassungsmittel ausgebildet sein. Beim Ausführungsbeispiel der Entgratvorrichtung 5, welches in Fig. 3 dargestellt ist, kann das Erfassungsmittel 21 zur Erfassung der Gratform in Förderrichtung 17 gesehen vor der Schwallbrause 6 angeordnet sein und das Erfassungsmittel 22 zur Kontrolle des Gießkerns 1 bzw. der Gießform 2 in Förderrichtung 17 gesehen nach der Schwallbrause 6 angeordnet sein.

Weiters ist es auch denkbar, dass ein und dasselbe Erfassungsmittel 21, 22 zur Erfassung der Gratform und zur Kontrolle des Gießkerns 1 bzw. der Gießform 2 verwendet wird.

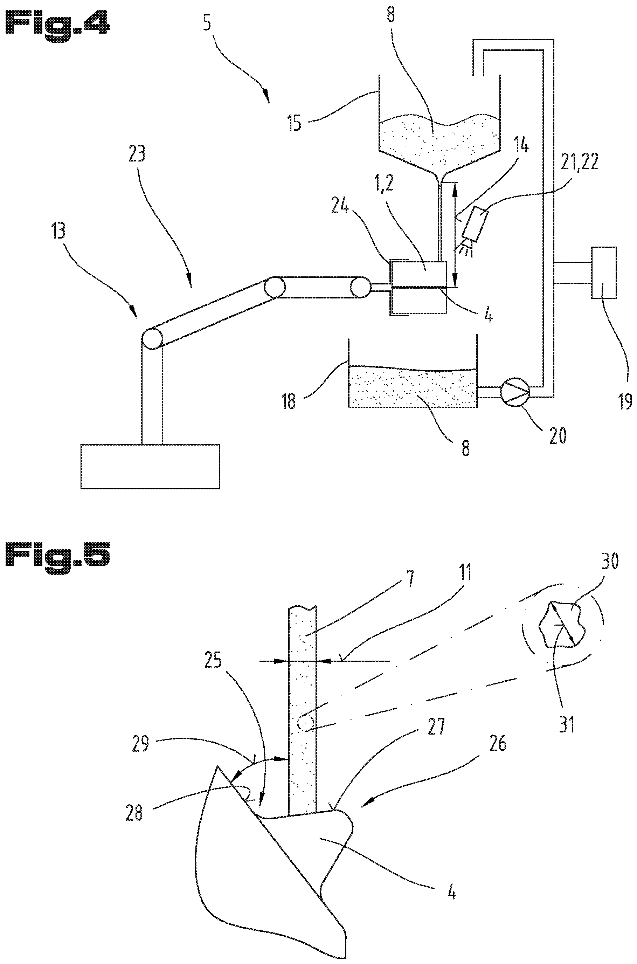

Fig. 4 zeigt ein weiteres Ausführungsbeispiel der Entgratvorrichtung 5, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass die Haltevorrichtung 13 einen Schwenkarmroboter 23 umfasst, welcher eine Greifvorrichtung 24 aufweist, mittels welcher die Gießkerne 1 bzw. die Gießformen 2 gehalten und manipuliert werden können. Mittels dem Schwenkarmroboter 23 kann ein einzelner Gießkern 1 bzw. eine einzelne Gießform 2 unter die Schwallbrause 6 gehalten werden. Insbesondere kann der Gießkern 1 bzw. die Gießform 2 dabei so bewegt bzw. in deren Orientierung ausgerichtet werden, dass der Strahlgutschwall 7 entlang des Grates 4 bewegt wird. Insbesondere kann der Strahlgutschwall 7 somit entlang des Pfades des Grates 4 geführt werden, um den Grat 4 vollumfänglich abschlagen zu können.

Unterhalb der Schwallbrause 6 kann ebenfalls ein Auffangbehälter 18 angeordnet sein, welcher zur Aufnahme des Strahlgutes 8 dient.

Weiters kann ebenfalls eine Strahlgutfördervorrichtung 20 vorgesehen sein, mittels welcher das Strahlgut 8 aus dem Auffangbehälter 18 in den Strahlgutbehälter 15 gefördert werden kann.

Wie in Fig.4 schematisch dargestellt, kann die Absaugvorrichtung 19 zum Entfernen der abgeschlagenen Gratfragmente aus dem Strahlgut 8 im Bereich der Strahlgutfördervorrichtung 20 ausgebildet sein. Weiters kann ein Erfassungsmittel 21, 22 zur Erfassung der Gratform bzw. zur Kontrolle des Gießkerns 1 bzw. der Gießform 2 ausgebildet sein.

Weiters kann vorgesehen sein, dass der Gießkern 1 bzw. die Gießform 2 Greifabschnitte aufweisen, welche mittels der Greifvorrichtung 24 gegriffen werden können und somit der Gießkern 1 bzw. die Gießform 2 gehalten bzw. manipuliert werden können.

Fig. 5 zeigt eine Detailansicht des Grates 4 bzw. des Strahlgutschwalles 7 in jenem Moment, in dem der Strahlgutschwall 7 auf den Grat 4 auftrifft und den Grat 4 vom Gießkern 1 bzw. von der Gießform 2 abbricht.

Wie aus Fig. 5 ersichtlich, weist der Grat 4 einen Gratfuß 25 und einen Gratkopf 26 auf, zwischen welchem sich eine Gratseitenfläche 27 erstreckt. Vorzugsweise wird der Gießkern 1 bzw. die Gießform 2 derart zur Schwallbrause 6 positioniert, dass der Strahlgutschwall 7 auf die Gratseitenflächen 27 des Grates 4 auftrifft. Dadurch kann mittels dem Strahlgutschwall 7 der Grat 4 vom Gießkern 1 bzw. von der Gießform 2 abgeschlagen werden. Insbesondere kann es zweckmäßig sein, wenn der Strahlgutschwall 7 in etwa im rechten Winkel bzw. normal auf die Gratseitenfläche 27 auftrifft. Aufgrund der geometrischen Beschaffenheit des Grates 4 kann es somit notwendig sein, dass zwischen einer Gratanschlussfläche 28, welche Teil der Außenkontur 3 ist, und dem Strahlgutschwall 7 ein Bestrahlwinkel 29 vorgesehen ist. Der Bestrahlwinkel 29 kann zwischen 0° und 90°, insbesondere zwischen 2° und 45°, bevorzugt zwischen 5° und 15° betragen.

Wie aus der Detailansicht der Fig. 5 ersichtlich, weist der Strahlgutschwall 7 bzw. das Strahlgut 8 eine große Anzahl von Teilchen 30 auf, welche zum Abschlagen des Grates 4 dienen. Der Strahlgutschwall 7 kann natürlich eine viel größere Breite 11 aufweisen, als dies dargestellt ist. Insbesondere kann vorgesehen sein, dass die Breite 11 des Strahlgutschwalles 7 größer ist, als die Erstreckung des Grates 4. Aus Gründen der Übersichtlichkeit ist der Strahlgutschwall 7 jedoch symbolisch mit einer nur geringen Breite 11 dargestellt.

Die Teilchen 30 können eine kugelähnliche Form mit einer unregelmäßigen Oberfläche aufweisen, wobei die Teilchen 30 einen Durchmesser 31 aufweisen. Als Durchmesser 31 des Teilchens 30 wird hierbei die größte Erstreckung des Teilchens 30 bezeichnet. Natürlich ist es denkbar, dass die Teilchen 30 nicht nur eine Kugelähnliche Form aufweisen, sondern dass die Teilchen 30 eine längliche Erstreckung aufweisen.

Insbesondere kann vorgesehen sein, dass die Teilchen 30 aus Schrott gebildet sind. Die Teilchen 30 können somit aus einem metallischen Werkstoff gebildet sein. Insbesondere kann hierbei vorgesehen sein, dass die Teilchen 30 aus Stahl gebildet sind.

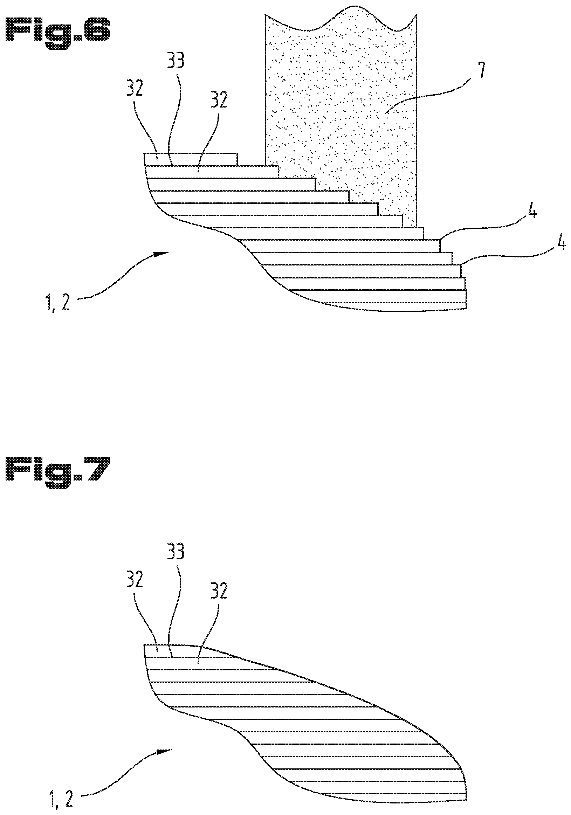

In der Fig. 6 ist eine weitere und gegebenenfalls für sich eigenständige Ausführungsform des Gießkerns 1 bzw. der Gießform 2 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Fig. 6 zeigt einen Ausschnitt einer Oberfläche eines Gießkerns 1 bzw. einer Gießform 2, welche durch 3D-Druck hergestellt wurden. Aus Fig. 6 ist gut ersichtlich, dass in einem 3D-Verfahren aufgebaute Gießkerne 1 bzw. Gießformen 2 einen schichtweisen Aufbau mit mehreren Einzelschichten 32 aufweisen. Die Einzelschichten 32 können hierbei mittels einem Bindemittel 33, beispielsweise einem Harz oder einem Klebstoff, miteinander gekoppelt sein. Weiters ist es auch möglich, dass das Bindemittel 33 zwischen den Sandkörnern einer Einzelschicht 32 angeordnet ist.

Das Bindemittel 33 kann abwechselnd mit den Einzelschichten 32 aufgetragen werden. Die nächste Einzelschicht 32 haftet hierbei nur an jenem Bereich an, an dem auch ein Bindemittel 33 aufgetragen wurde. Somit kann durch diese Maßnahme die Ausdehnung der nächsten Einzelschichten 32 bestimmt werden.

Alternativ dazu ist es auch denkbar, dass das Bindemittel 33 direkt beim Auftragen der Einzelschichten 32 zwischen die Sandkörner der Einzelschichten 32 eingebracht wird.

Oberflächenstrukturen, wie beispielsweise Übergangsradien, werden bei derart aufgebauten Gießkernen 1 bzw. Gießformen 2 dadurch erzeugt, dass die Einzelschichten 32 eine unterschiedliche Ausdehnung aufweisen, wodurch eine treppenartige Abstufung der Einzelschichten 32 erzeugt wird. Jede der Einzelschichten 32 bildet hierbei einen Grat 4 aus.

Durch Behandeln einer derartig ausgebildeten stufigen Oberfläche des Gießkerns 1 bzw. der Gießform 2 mit den erfindungsgemäßen Verfahrensschritten, kann die Oberfläche mittels dem Strahlgutschwall 7 geglättet werden. Insbesondere werden hierbei die einzelnen Grate 4 der Einzelschichten 32 abgetragen.

In Fig. 7 ist die geglättete Oberfläche des Gießkerns 1 bzw. der Gießform 2 dargestellt. Wie aus Fig. 7 ersichtlich sind hierbei die Grate 4 abgeschlagen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Gießkern | 31 | Durchmesser |
| 2 | Gießform | 32 | Einzelschicht |
| 3 | Außenkontur | 33 | Bindemittel |
| 4 | Grat | | |
| 5 | Entgratvorrichtung | | |
| 6 | Schwallbrause | | |
| 7 | Strahlgutschwall | | |
| 8 | Strahlgut | | |
| 9 | Unterseite | | |
| 10 | Austrittsöffnung | | |
| 11 | Breite | | |
| 12 | Länge | | |
| 13 | Haltevorrichtung | | |
| 14 | Fallhöhe | | |
| 15 | Strahlgutbehälter | | |
| 16 | Fördervorrichtung | | |
| 17 | Förderrichtung | | |
| 18 | Auffangbehälter | | |
| 19 | Absaugvorrichtung | | |
| 20 | Strahlgutfördervorrichtung | | |
| 21 | Erfassungsmittel Gratform | | |
| 22 | Erfassungsmittel Kontrolle | | |
| 23 | Schwenkarmroboter | | |
| 24 | Greifvorrichtung | | |
| 25 | Gratfuß | | |
| 26 | Gratkopf | | |
| 27 | Gratseitenfläche | | |
| 28 | Gratanschlussfläche | | |
| 29 | Bestrahlwinkel | | |
| 30 | Teilchen | | |

## Patentansprüche

1. Verfahren zum Entgraten von Gießkernen (1) und/oder Gießformen (2), **gekennzeichnet durch** die Verfahrensschritte:
- Bereitstellen eines Gießkernes (1) oder einer Gießform (2) mit einem darauf befindlichen Grat (4);
- Bereitstellen einer Entgratvorrichtung (5), umfassend:
eine Schwallbrause (6) zum Erzeugen eines Strahlgutschwalles (7);
eine Haltevorrichtung (13) zur Aufnahme des Gießkerns (1) und/oder der Gießform (2);
- Relativbewegen des Gießkernes (1) oder der Gießform (2) zum Strahlgutschwall (7), sodass der Strahlgutschwall (7) auf den Grat (4) am Gießkern (1) oder der Gießform (2) auftrifft und der Grat (4) mittels dem Strahlgutschwall (7) vom Gießkern (1) oder der Gießform (2) abgeschlagen wird,
**dadurch gekennzeichnet, dass**
die Haltevorrichtung (13) ortsfest angeordnet ist und die Schwallbrause (6) relativ zur Haltevorrichtung (13) bewegt wird.

2. Verfahren nach Anspruch 1, **dadurch gekennzeichnet, dass** der Strahlgutschwall (7) nach dem Austreten aus der Schwallbrause (6) durch seine potentielle Energie beschleunigt wird und nach einer vorbestimmten Fallhöhe (14) auf den Gießkern (1) oder die Gießform (2) auftrifft.

3. Verfahren nach einem der vorhergehenden Ansprüche, **dadurch gekennzeichnet, dass** der Strahlgutschwall (7) eine große Anzahl von Teilchen (30) umfasst, die einen Durchmesser (31) zwischen 0,3mm und 5mm, insbesondere zwischen 1mm und 3mm, bevorzugt zwischen 1,4mm und 2mm aufweisen.

4. Verfahren nach Anspruch 3, **dadurch gekennzeichnet, dass** die Teilchen (30) des Strahlgutschwalles (7) aus Schrott gewonnen sind.

5. Verfahren nach einem der Ansprüche 2 bis 4, **dadurch gekennzeichnet, dass** auf Basis der Beschaffenheit des abzuschlagenden Grates (4) die Fallhöhe (14) und die Beweggeschwindigkeit des Gießkerns (1) oder der Gießform (2) relativ zum Strahlgutschwall (7) derart festgelegt wird, dass ausschließlich der Grat (4) abgeschlagen wird und die restliche Außenkontur (3) des Gießkerns (1) oder der Gießform (2) nicht beschädigt wird.

6. Verfahren nach einem der vorhergehenden Ansprüche, **dadurch gekennzeichnet, dass** die Beschaffenheit des Grates (4) vor der Behandlung mittels dem Strahlgutschwall (7) mittels einem Erfassungsmittel (21), insbesondere einem optischen Erfassungsmittel, erfasst wird.

7. Verfahren nach einem der vorhergehenden Ansprüche, **dadurch gekennzeichnet, dass** mittels einer Absaugvorrichtung (19) die abgeschlagenen Gratfragmente aus der Entgratvorrichtung (5) entfernt werden.

8. Verfahren nach einem der vorhergehenden Ansprüche, **dadurch gekennzeichnet, dass** der Gießkern (1) oder die Gießform (2) nach der Behandlung mittels dem Strahlgutschwall (7) mittels einem Erfassungsmittel (22), insbesondere einem optischen Erfassungsmittel, erfasst wird und die korrekte Entfernung des Grates (4) kontrolliert wird.

9. Verfahren nach einem der vorhergehenden Ansprüche, **dadurch gekennzeichnet, dass** an einem durch 3D-Druck hergestellten Gießkern (1) oder Gießform (2) mehrere Grate (4) in einer stufigen Anordnung ausgebildet sind und dass mittels dem Strahlgutschwall (7) eine geglättete Oberfläche erzeugt wird.

10. Entgratvorrichtung (5) zum Entgraten von Gießkernen (1) und/oder Gießformen (2), umfassend:
- eine Schwallbrause (6) zum Erzeugen eines Strahlgutschwalles (7);
- eine Haltevorrichtung (13) zur Aufnahme zumindest eines Gießkerns (1) und/oder einer Gießform (2),
wobei
die Haltevorrichtung (13) und die Schwallbrause (6) derart ausgebildet sind, dass der Gießkern (1) und/oder die Gießform (2) durch den Strahlgutschwall (7) führbar ist, **dadurch gekennzeichnet, dass** die Haltevorrichtung (13) ortsfest angeordnet ist und die Schwallbrause (6) relativ zur Haltevorrichtung (13) bewegbar ist.

11. Entgratvorrichtung nach Anspruch 10, **dadurch gekennzeichnet, dass** die Haltevorrichtung (13) in Form eines Schwenkarmroboters (23) ausgebildet ist.

12. Entgratvorrichtung nach Anspruch 11, **dadurch gekennzeichnet, dass** am Schwenkarmroboter (23) eine Greifvorrichtung (24) zum Halten des Gießkerns (1) oder der Gießform (2) angeordnet ist, wobei die Greifvorrichtung (24) und/oder der Schwenkarmroboter (23) zumindest teilweise eine Beschichtung aufweist, die die Greifvorrichtung (24) und/oder den Schwenkarmroboter (23) vor dem Strahlgutschwall (7) schützt.

13. Entgratvorrichtung nach einem der Ansprüche 10 bis 12, **dadurch gekennzeichnet, dass** die Schwallbrause (6) an einen Strahlgutbehälter (15) gekoppelt ist, welcher oberhalb der Schwallbrause (6) angeordnet ist.

## Claims

1. A method for deburring casting cores (1) and/or casting molds (2), **characterized by** the method steps:
- providing a casting core (1) or a casting mold (2) with a burr (4) located thereon;
- providing a deburring device (5) comprising:
a surge shower (6) for generating a surge of blasting material (7);
a holding device (13) for receiving the casting core (1) and/or the casting mold (2);
- moving the casting core (1) or the casting mold (2) relative to the surge of blasting material (7) so that the surge of blasting material (7) strikes the burr (4) on the casting core (1) or the casting mold (2) and the burr (4) is knocked off the casting core (1) or the casting mold (2) by means of the surge of blasting material (7),
**characterized in that**
the holding device (13) is arranged in a stationary manner and the surge shower (6) is moved relative to the holding device (13).

2. The method according to claim 1, **characterized in that** the surge of blasting material (7) is accelerated by its potential energy after emerging from the surge shower (6) and strikes the casting core (1) or the casting mold (2) after a predetermined drop height (14).

3. The method according to one of the preceding claims, **characterized in that** the surge of blasting material (7) comprises a large number of particles (30) having a diameter (31) between 0.3 mm and 5 mm, in particular between 1 mm and 3 mm, preferably between 1.4 mm and 2 mm.

4. The method according to claim 3, **characterized in that** the particles (30) of the surge of blasting material (7) are obtained from scrap.

5. The method according to one of claims 2 to 4, **characterized in that**, on the basis of the nature of the burr (4) to be knocked off, the drop height (14) and the speed of movement of the casting core (1) or of the casting mold (2) relative to the surge of blasting material (7) are determined such that only the burr (4) is knocked off and the remaining outer contour (3) of the casting core (1) or of the casting mold (2) is not damaged.

6. The method according to one of the preceding claims, **characterized in that** the nature of the burr (4) is detected before the treatment by means of the surge of blasting material (7) by means of a detection means (21), in particular an optical detection means.

7. The method according to one of the preceding claims, **characterized in that** by means of a suction device (19) the knocked off burr fragments are removed from the deburring device (5).

8. The method according to one of the preceding claims, **characterized in that** the casting core (1) or the casting mold (2) is detected after treatment by means of the surge of blasting material (7) by means of a detection means (22), in particular an optical detection means, and the correct removal of the burr (4) is checked.

9. The method according to one of the preceding claims, **characterized in that** a plurality of burrs (4) are formed in a stepped arrangement on a casting core (1) or casting mold (2) produced by 3D printing, and that a smoothed surface is produced by means of the surge of blasting material (7).

10. A deburring device (5) for deburring casting cores (1) and/or casting molds (2), comprising:
- a surge shower (6) for generating a surge of blasting material (7);
- a holding device (13) for receiving at least one casting core (1) and/or casting mold (2),
wherein
the holding device (13) and the surge shower (6) are formed such that the casting core (1) and/or the casting mold (2) can be guided through the surge of blasting material (7), **characterized in that** the holding device (13) is arranged in a stationary manner and the surge shower (6) can be moved relative to the holding device (13).

11. The deburring device according to claim 10, **characterized in that** the holding device (13) is formed as a swivel-arm robot (23).

12. The deburring device according to claim 11, **characterized in that** a gripper device (24) for holding the casting core (1) or the casting mold (2) is arranged on the swivel-arm robot (23), wherein the gripper device (24) and/or the swivel-arm robot (23) at least partially comprises a coating which protects the gripper device (24) and/or the swivel-arm robot (23) from the surge of blasting material (7).

13. The deburring device according to one of claims 10 to 12, **characterized in that** the surge shower (6) is coupled to a blasting material container (15), which is arranged above the surge shower (6).

## Revendications

1. Procédé d'ébavurage de noyaux de coulée (1) et/ou de moules de coulée (2), **caractérisé par** les étapes suivantes :
- mise à disposition d'un noyau de coulée (1) ou d'un moule de coulée (2) avec une bavure (4) se trouvant dessus ;
- mise à disposition d'un dispositif d'ébavurage (5) comprenant
un gicleur (6) pour la production d'un jet de sablage (7) ;
un dispositif de maintien (13) pour le logement du noyau de coulée (1) et/ou du moule de coulée (2) ;
- déplacement relatif du noyau de coulée (1) ou du moule de coulée (2) par rapport au jet de sablage (7), de sorte que le jet de sablage (7) arrive sur la bavure (4) sur le noyau de coulée (1) ou le moule de coulée (2) et la bavure (4) est éliminée du noyau de coulée (1) ou du moule de coulée (2) au moyen du jet de sablage (7),
**caractérisé en ce que**
le dispositif de maintien (13) est disposé de manière fixe et le gicleur (6) est déplacé par rapport au dispositif de maintien (13).

2. Procédé selon la revendication 1, **caractérisé en ce que** le jet de sablage (7) est accéléré, après sa sortie du gicleur (6), par son énergie potentielle et il arrive, après une hauteur de chute (14) prédéterminée, sur le noyau de coulée (1) ou sur le moule de coulée (2).

3. Procédé selon l'une des revendications précédentes, **caractérisé en ce que** le jet de sablage (7) comprend un grand nombre de particules (30) qui présentent un diamètre (31) entre 0,3 mm et 5 mm, plus particulièrement entre 1 mm et 3 mm, de préférence entre 1,4 mm et 2 mm.

4. Procédé selon la revendication 3, **caractérisé en ce que** les particules (30) du jet de sablage (7) sont obtenues à partir de ferraille.

5. Procédé selon l'une des revendications 2 à 4, **caractérisé en ce que**, sur la base de la nature de la bavure (4) à éliminer, la hauteur de chute (14) et la vitesse de déplacement du noyau de coulée (1) ou du moule de coulée (2) par rapport au jet de sablage (7) sont déterminées de sorte que seule la bavure (4) est éliminée et le reste du contour externe (3) du noyau de coulée (1) ou du moule de coulée (2) n'est pas endommagé.

6. Procédé selon l'une des revendications précédentes, **caractérisé en ce que** propriétés de la bavure (4) sont déterminées avant le traitement au moyen du jet de sablage (7) à l'aide d'un moyen de mesure (21), plus particulièrement un moyen de mesure optique.

7. Procédé selon l'une des revendications précédentes, **caractérisé en ce que**, au moyen d'un dispositif d'aspiration (19), les fragments de bavure éliminés sont évacués hors du dispositif d'ébavurage (5).

8. Procédé selon l'une des revendications précédentes, **caractérisé en ce que** le noyau de coulée (1) ou le moule de coulée (2) est mesuré, après le traitement au moyen du jet de sablage (7), à l'aide d'un moyen de mesure (22), plus particulièrement un moyen de mesure optique, et l'élimination correcte de la bavure (4) est contrôlée.

9. Procédé selon l'une des revendications précédentes, **caractérisé en ce que**, sur un noyau de coulée (1) ou moule de coulée (2) fabriqué par impression 3D, plusieurs bavures (4) sont formées de manière échelonnée et **en ce que**, une surface lissée est produite au moyen du jet de sablage (7).

10. Dispositif d'ébavurage (5) pur l'ébavurage de noyaux de coulée (1) et/ou de moules de coulée (2), comprenant :
- un gicleur (6) pour la production d'un jet de sablage (7) ;
- un dispositif de maintien (13) pour le logement d'au moins un noyau de coulée (1) et/ou un moule de coulée (2),
dans lequel
le dispositif de maintien (13) et le gicleur (6) sont conçus de sorte que le noyau de coulée (1) et/ou le moule de coulée (2) peut être guidé à travers le jet de sablage (7), **caractérisé en ce que** le dispositif de maintien (13) est disposé de manière fixe et le gicleur (6) peut être déplacé par rapport au dispositif de maintien (13).

11. Dispositif d'ébavurage selon la revendication 10, **caractérisé en ce que** le dispositif de maintien (13) est conçu sous la forme d'un robot à bras pivotant (23).

12. Dispositif d'ébavurage selon la revendication 11, **caractérisé en ce que**, sur le robot à bras pivotant (23) est disposé un dispositif de préhension (24) pour le maintien du noyau de coulée (1) ou du moule de coulée (2), dans lequel le dispositif de préhension (24) et/ou le robot à bras pivotant (23) comprend au moins partiellement un revêtement qui protège le dispositif de préhension (24) et/ou le robot à bras pivotant (23) du jet de sablage (7).

13. Dispositif d'ébavurage selon l'une des revendications 10 à 12, **caractérisé en ce que** le jet de sablage (6) est couplé à un récipient de sablage (15) qui est disposé au-dessus du gicleur (6).
